# EUROPEAN PATENT APPLICATION

(11) **EP 3 249 499 A1**
(43) Date of publication of application: **29.11.2017**
(21) Application number: 15879129.3
(22) Date of filing: 16.12.2015
(51) Int. Cl.: G06F 3/0354, G06F 21/64, H04L 9/32

(54) **METHOD AND DEVICE FOR PROVIDING A TRUSTED ENVIRONMENT FOR EXECUTING AN ANALOGUE-DIGITAL SIGNATURE**

(30) Priority: 20.01.2015 RU 2015101605
(71) Applicant: Obschestvo S Ogranichennoj Otvetstvennostyu "Laboratoria Elandis", Syktyvkar 167000 (RU)
(72) Inventor: GERTNER, Dmitry Aleksandrovich, Syktyvkar 167000 (RU)
(74) Representative: Chimini, Francesco
(86) International application number: PCT/RU2015/000887
(87) International publication number: WO 2016/118048

(57) **Abstract**

The invention relates to the field of providing a trusted environment for executing an analogue-digital signature. The claimed document-signing device in the form of a stylus includes a protective compartment, in which the following are disposed: a microcontroller with a programme code; a memory with a secret digital signature key; and additionally inertial sensors, which are connected to the microcontroller; a lens; and a camera, which is also connected to the microcontroller. A wireless interface is used in order to communicate with a computer. The inertial sensors serve to verify the handwritten signature of the user, while the lens and camera serve to carry out a comparison with the text of an electronic document uploaded via the wireless interface. In this way it is ensured that verified information enters the trusted environment of the stylus.

## Description

The invention relates to the electronic industry, namely, to paperless technologies for document management and can be used to transform the enterprise's primary documentation into the electronic form.

There are known electronic digital signature (EDS) algorithms that allow signing electronic documents with an electronic digital signature using secret user keys and verifying the authenticity of electronic digital signatures for public keys. The ownership of a public key to a particular user is verified by a digital signature of the trust center in the form of a digital certificate. For each user, a pair of unique keys is generated - the secret and public keys of the electronic digital signature. The user must keep his secret key in secret and use it when signing an electronic document.

The disadvantage of an electronic digital signature is the difficulty of creating trusted environment when signing electronic documents, especially when it comes to information containing legal facts. The trusted environment must ensure that the creation of an electronic digital signature in an electronic document is carried out in a trusted system, including hardware and software. To do this, you need to use a certified computer and software, with the help of which it is supposed to create an electronic digital signature. In doing so, it is not allowed to connect the computer to non-certified resources in the public network and run non-certified software on the computer, or give the computer to other people. Violation of these conditions creates potential threats:
- - unauthorized access to the cryptographic capabilities of the token / smart card with unrecoverable keys using spyware allows to conduct an attack using remote client computer tools, attack using a remote connection to a USB-port (USB-over-IP);
- - substitution of the document when it needs to be signed in a token with non-recoverable keys. The attack is possible with the use of spyware and / or due to errors in software implementation. The user sees one data on the monitor screen, and another one is sent to the signature.

In fact, you can only use a certified computer to sign electronic documents. Moreover, the user can sign electronic documents only on his own certified computer. All this creates serious problems for the wide use of electronic digital signatures.

The closest analogue is the invention "the way of signing documents by an electronic analog-digital signature and its realizing device" - patent of the Russian Federation No. 3398334, which allows signing documents by an electronic analog-digital signature, without preliminary generating users' personal electronic digital signatures. Identification of the user who signs such an electronic document is carried out using the user's biometric data, which becomes an integral part only of this electronic document and that cannot be used in another electronic document of the same format.

The disadvantage of this method and the device is the lack of sufficient reliability, which results in the fact that if an electronic document is entered into a device with a computer on which software can be pre-installed, commonly referred to as hacking, that is capable to replace an electronic document displayed on the monitor screen with another electronic document entered into the device for signing it. That creates a potential vulnerability, which can result in that the user, contrary to his will, signs another electronic document than what he sees on the monitor screen. Therefore, in this analogue, documents for signing are entered not from the computer, but from a printed document and additional devices, such as a barcode, a scanner or a digital camera, which is inconvenient in use and the necessity of preliminary printing of electronic documents.

The object of the present invention is to provide the way which guarantees trusted environment for an analog-digital signature performance and its realizing device that will eliminate this vulnerability and allow securely entering of electronic documents directly from any computer into the signature device.

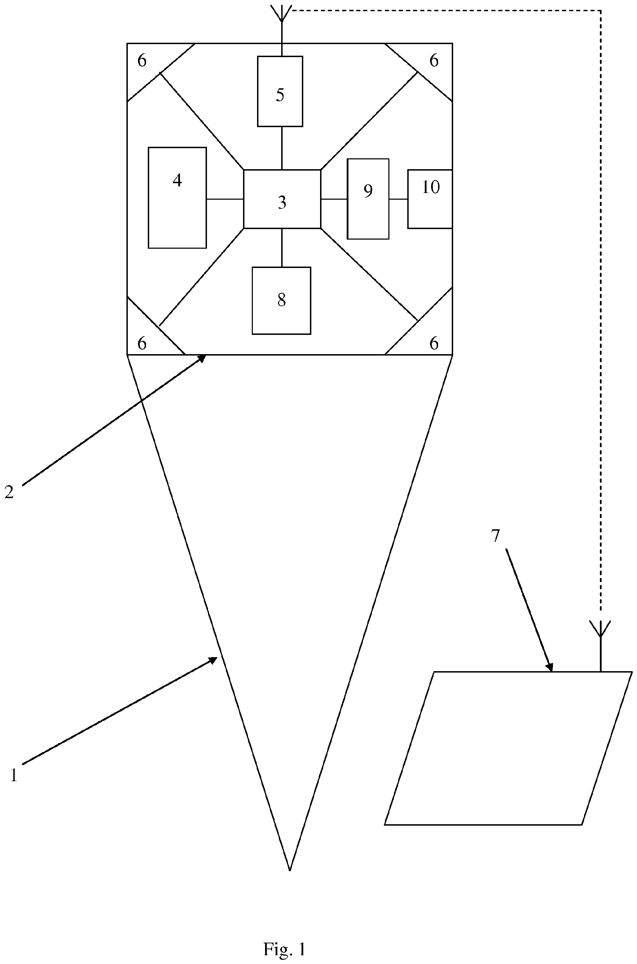

This task is achieved by the fact that the device for signing documents with an electronic analog-digital signature in the form of a stylus 1 (fig. 1) for entering a handwritten signature consists of a protected compartment 2 in which there is a microcontroller 3 and associated memory 4. In the microcontroller 3 there is a program code for data processing and cryptographic operations, in particular algorithms for calculating the checksum and electronic digital signature. Memory 4 contains a secret digital signature key. The public key and, if necessary, the digital signature certificate may be positioned on external media. In addition, the stylus 1 comprises a transceiver 5 for wireless communication with an external computer. The transceiver 5 is connected to the microcontroller 3. The protected compartment 2 contains the tamper detectors 6 associated with the microcontroller 3 and the memory 4. In the case of damage of the protected compartment 2, the secret key in the memory 3 is erased. The microcontroller 3 is associated with the transceiver 5 for wireless communication with an external computer and processes the data and outputs the processed information through the transceiver 5 to the computer 7. According to the invention, the device is characterized by fact that into the protected compartment 2, inertial sensors 8 for recording the inertial characteristics of the stylus, and consequently the handwritten signature are placed. The inertial sensors 8 are connected to the microcontroller 3. As an inertial sensor, an accelerometer, a gyroscope and a magnetometer made using a micromechanical technology can be used. These miniature sensors are able to give the necessary information about the stylus movement - acceleration, speed, course and angles of inclination.

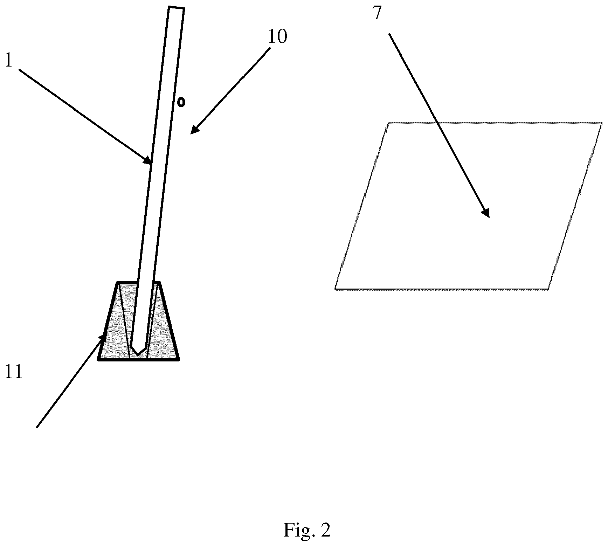

More over camera 9 with an objective 10 is placed in the protected compartment 2. The lens 10 is led out through the transparent portion of the protected compartment 2 for optical input of information from the computer screen 7. And the camera 9 is connected to the microcontroller 3. As for the camera, a photodiode CCD (charge-coupled device) or CMOS (complementary metal-oxide semiconductor) matrix, and as for a lens you can use a miniature lens type pinhole. In order that the lens is able to cover the screen of the computer, it is placed on the back of the stylus on the side. Additionally, the user can use the stand 11 (fig. 2) for the stylus 1 to provide qualitative conditions for the operation of the camera 9.

The method of providing trusted environment for performing the analog-digital signature of the first variant works as follows. The user sees an electronic document on the monitor screen of an external computer 7. It is verified that a signature device is connected to the computer 7 via a wireless link. The user has the stylus 1 so that the screen of the computer 7 is in view of the lens 10 located on the back of the stylus 1. For this the user can use the stand 11. Then that the document is in the field of view of the lens 10, the user will be able to see on the screen in the form of selection of the electronic document fragments that were shot by the camera 9. The selection is possible as a color change or shade of the text, and its background. The control of the camera 9 and the lens 10 and for taking an image from the screen of the computer 7 is made by a program outputting the image of the electronic document to the computer screen 7. This program interacts with the microcontroller 3, the camera 9 and the objective 10 through the wireless transceiver 5. The program captures which text fragments of the electronic document and at what time it was displayed on the computer screen 7 and transmits this information through the wireless transceiver 5 to the microcontroller 3. If a fragment of the electronic document that has not yet been shot by the camera 9, the program instructs the microcontroller 3 to take another picture, and the microcontroller 3 sends camera 9 a command to take a picture. The camera 9 receives the next shot of the electronic document and transmits it to the microcontroller 3. In the microcontroller 3, by means of the program code, an electronic document received through the transceiver 5 with the image received from the camera 7 is compared. For this, it is determined whether the text in the received image frames corresponds to the digitized text of the electronic document. Since the text in the resulting picture area for the microcontroller is an image, then for the comparison with the digitized text of the electronic document, the picture needs to be recognized, which is quite a challenge for the microcontroller 3. First, it is necessary to recognize the screen borders on the image, and then the picture inside the screen borders. The first task can be transferred to an external computer with a more powerful processor. And the second task of recognizing the picture inside the screen borders should be performed exactly in the microcontroller 3, i.e. in trusted environment. Therefore, to simplify and speed up the recognizing of a picture, a well-known text of an electronic document is superimposed over the picture. Moreover, the text symbols are superimposed exactly in those places on the picture, where they are in the field of the document, since this information is also transmitted by the program from computer 7 to the microcontroller 3. Thus, the recognition task goes to the following point: is the object in the picture similar to certain coordinates of the location on a well-known symbol. And if it is similar, then with what part of the error. The error threshold is specified in advance. If the error is less than the specified threshold, then the object in the picture is considered to correspond to the symbol with which it was compared. The microcontroller 3 informs the program in computer 7 which fragments of the text have successfully passed the matching procedure and the program additionally allocates these fragments of text in the electronic document when they are displayed on the screen. Thus, while reading the user can visually verify that the electronic document has been successfully uploaded to the trusted environment.

After the electronic document has been loaded into the trusted environment, the user can sign it using the stylus 1 on the computer screen 7. It is assumed that a screen with pen input function is used. It can be a tablet computer with a touchscreen screen. In this case, it is possible that the user will enter his handwritten signature on some other device intended for this purpose. In any case, the handwritten input device must receive a digitized handwritten signature video and send it through the wireless transceiver to the transceiver 5 of the stylus 1, from where it will be placed in the trusted environment in the protective compartment 2, namely to the microcontroller 3. Simultaneously with this the inertial sensors 8 also supply data to microcontroller 3 with information about the movement of the stylus during the input of the handwritten signature. These data are supplied by sensors such as an accelerometer, a gyroscope and a magnetometer made using micromechanical technology. With a certain amount of error in the data from inertial sensors and the video of the handwritten signature correlate with each other. This interrelation, with a predetermined error, using the program code in the microcontroller 3 is used to determine whether the uploaded digital signature of the data from the inertial sensors. To obtain comparisons, a common timeline is used, which simplifies the comparison analysis.

In the case of a positive outcome of both comparisons trusted environment is considered secured. Then cryptographic operations of imposing a digital signature on the digitized video of a handwritten signature and a digitized electronic document using the secret key of the digital signature from memory in the microcontroller are made.

The second variant for providing trusted environment for performing an analog-digital signature works as follows. Before signing electronic documents the user must first upload a sample of his handwritten signature into the memory 4 in the stylus 1. To do this, the user must make a signature several times using the stylus 1 on the screen with the pen input and select the best variant of the signature as a sample. Simultaneously with this in the stylus 1 the inertial sensors 8 form and transfer to the microcontroller 3 and further to the memory 4 inertial characteristics corresponding to the received handwritten signatures of the user. In this case, the software of the external computer 7 which interacts with the pen input screen will transmit to the microcontroller 3 of the stylus 1 via the wireless transceiver 5 the digitized handwritten signature of the user selected by him as a sample. The sample of the handwritten signature is stored in memory 4. And the inertial characteristics with the help of the program code in the microcontroller 3 are transferred to the biometric digital code as a sample of the inertial characteristics and also stored in the memory 4. The interrelation between the obtained samples is established. Moreover the user can add additional information to these samples, for example, the name and surname of the user to whom these samples belong.

If several users will use stylus 1, then several samples of signatures and their corresponding inertial characteristics can be stored in it.

After this preliminary stage the user can sign electronic documents using this stylus.

Preliminarily, just as in the first variant, an electronic document is input to the trusted environment of the stylus 1 through the wireless transceiver 5 and at the same time through the camera 9 and the lens 10.

After the electronic document is uploaded into the trusted environment, the user can sign it using the stylus 1. Any surface can be used for this. And the stylus 1 can be combined with a pen and accordingly the user can sign, for example, on a piece of paper, which after that can be immediately destroyed. At the moment when the user signs his handwritten signature, the inertial sensors 6 receive data on the stylus movement - the inertial characteristics of the signature are transferred to the microcontroller 3. In the microcontroller 3, using the program code, the data from inertial sensors are compared with samples of inertial characteristics recorded in memory 4 taking into account a predetermined error. In the case of a coincidence with any sample - the necessary sample of the handwritten signature corresponding to the given model of inertial characteristics is found in the memory.

In case of a positive result trusted environment is considered secured. Then cryptographic operations of digital signature imposition in the microcontroller using a secret digital signature key from memory 4 to a digitized electronic document and a corresponding handwritten signature sample is performed.

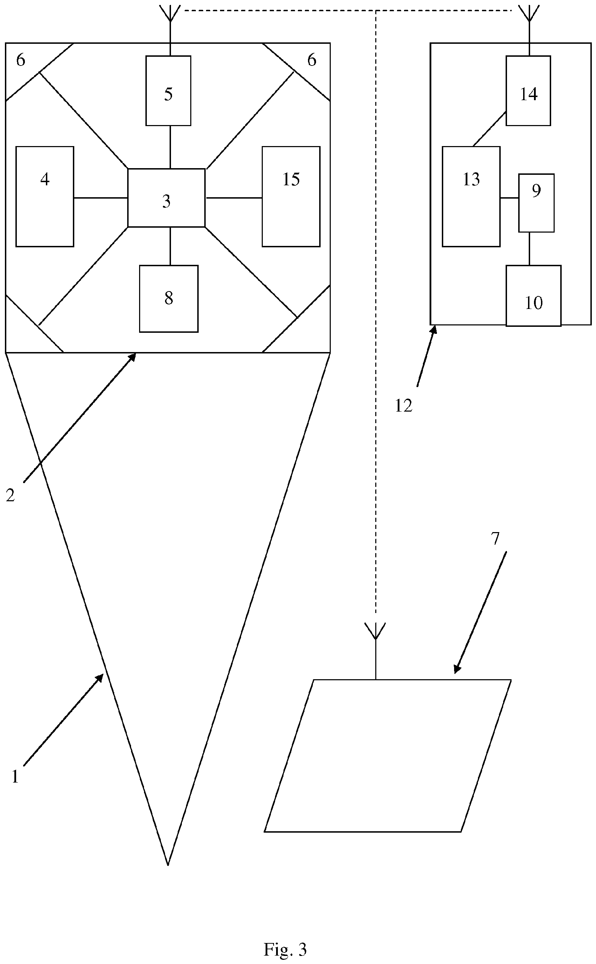

In particular cases, for the user's convenience, the invention may be implemented using an additional protected compartment 12 (fig. 3) that is physically separated from the stylus 1. In this case, the camera 9 and the objective 10 are placed in this secure compartment 12. A cryptographic module 13 with unique secret and public keys and a transceiver 14 for wireless communication are placed there as well. In this case, a similar cryptographic module 15 with unique secret and public keys is also included in the main secure compartment 2 to provide common trust environment between both protected compartments via interaction using the cryptographic modules and keys.

An additional protected compartment 12 can be made in the form of a spectacle headpiece or as part of a spectacle frame, with the lens placed on the outer front side of the frame, so that when the user is working at the computer with these glasses - the lens covers the computer screen 7. This option is convenient by the fact that you do not need to install the stylus 1 in front of the screen, pointing with the lens. If the user has glasses, then it is enough to wear glasses with the protected compartment 12. And then, while reading the electronic document, the lens 10 will also be directed towards the screen.

And in cases where there are increased requirements for protecting the confidentiality of electronic documents in the additional protected compartment 12 the module for scanning the user's retina can be installed. This module comprises a microcontroller with software, a memory for storing retina samples of one or more users, and at least one additional camera and lens associated with the microcontroller, the lens is located on the inside of the frame with the ability to scan the retina of the user's eyes when the user wears glasses. The photographed user's retina in this case can serve both for user authentication with access rights and for additional confirmation of the authorship of the signature. In the latter case, the picture with the user's retina is attached to the signed electronic document and the digitized handwritten signature has a common digital signature.

In general, the invention can be implemented in practice using known technologies and cryptographic algorithms, in particular digital signature algorithms and asymmetric encryption using elliptical functions. While the present invention has been described with reference to certain embodiments, specialists may propose other similar embodiments without departing from the spirit and scope of the invention. Therefore, the invention should be evaluated in the terms of the subject of the invention.

## Claims

1. The way to provide trusted environment for an analog-digital signature for electronic documents by means of a signing device in the form of a stylus, comprising:
• A protected compartment in which there is at least one microcontroller with a program code for processing data and performing cryptographic operations and associated memory with a secret digital signature key, the secure compartment being configured to erase the secret key in case of crippling of the protected compartment body;
• a transceiver connected to a microcontroller, for wireless communication with an external computer,
it differs in that:
At the production stage:
- In addition the inertial sensors are placed into the protected compartment to record the inertial characteristics of the handwritten signature and associate them with the microcontroller;
- In addition a camera with an objective for optical data input from the computer screen is placed to the protected compartment, and the camera is connected to the microcontroller;
In the process of signing the electronic documents:
- the data containing one or more frames with the image of the electronic document and the time of obtaining the data of the frames is received from the camera and is transferred to the microcontroller,
- the information containing the digitized electronic document, as well as information about which fragments of the text of the specified electronic document and at what time were displayed is received from the computer through the wireless transceiver and is transmitted to the microcontroller,
- microcontroller, using the program code, compares the electronic document with the image transferred to it by the camera, and it is determined whether the text in the received image frames corresponds to the digitized text of the electronic document,
- the inertial sensors data of the movement of the stylus is received and is transmitted to the microcontroller,
- the information containing the digitized video of the user's handwritten signature is received from the computer through the wireless transceiver and then transmitted to the microcontroller,
- in the microcontroller, using a software code, the handwritten signature video is compared with the data transferred to the microcontroller by inertial sensors and determines whether the data from the inertial sensors belongs to the digitized video of the signature,
- in the case of a positive result of both comparisons, trusted environment is considered to be secured and perform cryptographic operations of imposing a digital signature on a digital handwritten signature video and a digitized electronic document using a secret digital signature key in a microcontroller,
- the result in the form of a digital signature is returned to the computer via a wireless transceiver.

2. The way according to claim 1, wherein the comparison of the data with the inertial sensors with the digitized video of the handwritten signature is made by comparing them on a common timeline.

3. The way according to claim 1, wherein the data from the inertial sensors are matched with a predetermined error in the digitized video of the signature.

4. The way to provide trusted environment for an analog-digital signature of electronic documents by means of a signing device in the form of a stylus, comprising:
• A protected compartment in which there is at least one microcontroller with a program code for processing data and performing cryptographic operations and associated memory with a secret digital signature key, the secure compartment being configured to erase the secret key in case of crippling of the protected compartment body
• a transceiver connected to a microcontroller for wireless communication with an external computer,
it differs in that:
At the production stage:
- In addition the inertial sensors are placed into the protected compartment to record the inertial characteristics of the handwritten signature and associate them with the microcontroller and the memory,
- In addition a camera with an objective for optical data input from the computer screen is placed to the protected compartment, and the camera is connected to the microcontroller.
At the preparatory stage:
- at least one sample of the handwritten signature made by the stylus and a sample of the inertial characteristics of this handwritten signature obtained from inertial sensors is retained in memory,
In the process of signing the electronic documents:
- the data containing one or more frames with the image of the electronic document and the time of obtaining the data of the frames is received from the camera and is transferred to the microcontroller,
- the information containing the digitized electronic document, as well as information about which fragments of the text of the specified electronic document and at what time were displayed is received from the computer through the wireless transceiver and is transmitted to the microcontroller,
- microcontroller, using the program code, compares the electronic document with the image transferred to it by the camera, and it is determined whether the text in the received image frames corresponds to the digitized text of the electronic document,
- the inertial sensors data on the stylus movement is received and is transmitted to the microcontroller,
- the information containing the digitized video of the user's handwritten signature is received from the computer through the wireless transceiver and then is transmitted to the microcontroller,
- in the microcontroller, using the program code, the data from the inertial sensors are compared with the samples of inertial characteristics recorded in memory taking into account a predetermined error and, in case of coincidence, they find in the memory the necessary sample of the handwritten signature corresponding to the given model of the inertial characteristics,
- in the case of a positive result of both comparisons, trusted environment is considered to be secured and perform cryptographic operations of imposing a digital signature on a digital handwritten signature video and a digitized electronic document using a secret digital signature key in a microcontroller,
- the result in the form of a digital signature is returned to the computer via the wireless transceiver.

5. The way according to claim 1 and claim 4, wherein the comparison of the electronic document with the image of the document is performed by overlaying the text of the document, taking into account its location in the document field, into fragments of the document image having a similar location in the document image field.

6. The way according to claim 1 and claim 4, wherein the control of the camera and the lens for removing the image from the computer screen is made by a program that displays the image of the electronic document on the computer screen.

7. The way according to claim 6, wherein the program displaying the image of the electronic document on the computer screen visually identifies fragments of the text of this electronic document that were captured by the camera and further highlights those fragments of the text that have successfully passed the matching procedure.

8. A device for providing a trusted environment for performing an analog-digital signature of electronic documents by means of a device for signing in the form of a stylus, comprising:
A protected compartment in which there is at least one microcontroller with a program code for processing data and performing cryptographic operations and associated memory with a secret digital signature key, the secure compartment being configured to erase a secret key in case the integrity of the enclosure of the protected compartment,
Connected to a microcontroller, a transceiver for wireless communication with an external computer,
**Characterized in that** the protected compartment further includes:
- inertial sensors for recording stylus movements and associated with a microcontroller,
- a camera connected to the microcontroller, and a lens, the lens being led outward through a transparent portion of the protected compartment for optical input of information from the computer screen.

9. The device according to claim 8, wherein an accelerometer, a gyroscope and a magnetometer made using a micromechanical technology are used as inertial sensors.

10. The device according to claim 8, wherein a photodiode array is used as the camera, and a pinhole lens is used as the objective.

11. The device according to claim 8, wherein an additional protected compartment is physically separated from the stylus into which a camera, a lens, a cryptographic module with unique secret and public keys and a transceiver for wireless communication are placed, while in the main protected compartment also included a cryptographic module with unique secret and public keys to provide a common trusted environment through interaction using the specified cryptographic modules and keys.

12. The device according to claim 11, wherein the additional protected compartment is made in the form of a spectacle attachment.

13. The device according to claim 11, wherein the additional protected compartment is made as a part of the spectacle frame and the lens being located on the outside of the frame.

14. The device according to claim 13, wherein an additional security module includes a user's eye retina scan module.
